# EUROPEAN PATENT SPECIFICATION

(11) **EP 0 613 296 B1**
(45) Date of publication and mention of the grant of the patent: **07.01.1999**
(21) Application number: 94107454.4
(22) Date of filing: 23.10.1990
(51) Int. Cl.: H04N 5/74

(54) **Auto-focusing method in a liquid crystal projector**
Autofokusverfahren in einem Flüssigkristallprojektor
Méthode de focalisation automatique dans un projecteur à cristaux liquides

(30) Priority: 31.10.1989 JP 283532/89
(43) Date of publication of application: 31.08.1994
(62) Divisional of application: 90120332.3
(73) Proprietor: SEIKO EPSON CORPORATION, Shinjuku-ku Tokyo-to (JP)
(72) Inventor: Miyashita, Kiyoshi, Suwa-shi, Nagano-ken (JP)
(74) Representative: Hoffmann, Eckart, Dipl.-Ing.

(56) References cited:
- EP-A- 0 131 794
- WO-A-89/06417

## Description

The present invention relates to a auto-focusing method in a liquid crystal projector.

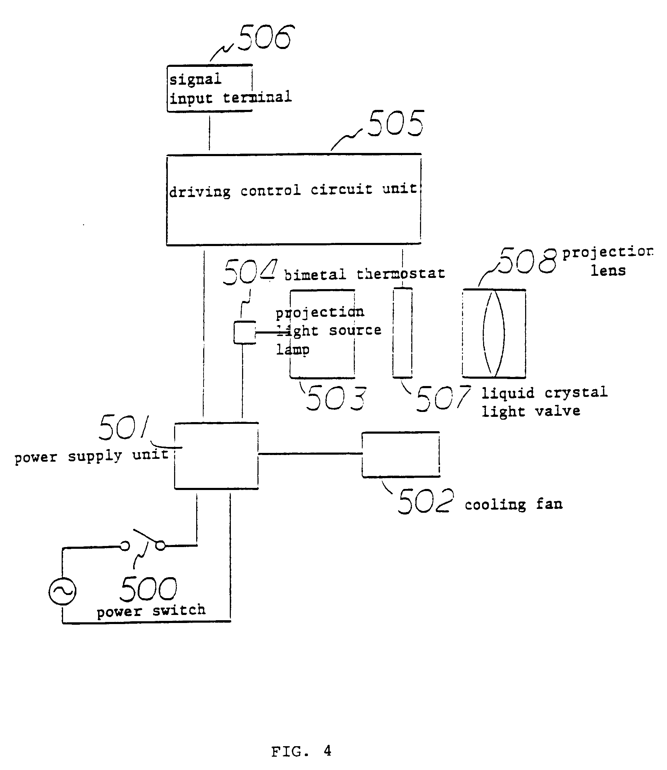

Fig. 4 is a block diagram illustrating one example of a prior art liquid crystal projector. 500 designates a power supply switch, and 501 is a power supply unit for supplying electric power to a drive control circuit unit 505. A bimetal thermostat 504 is connected between the power supply unit 501 and a lamp 503 forming a projection light source. The thermostat 504 cuts off the supply of electric power to the lamp 503, when a predetermined temperature is reached, for instance when an air vent is blocked so that the interior of the liquid crystal projector cannot be sufficiently cooled by a cooling fan 502. A signal input terminal 506 is connected to the drive control circuit unit 505. A liquid crystal light valve 507 is driven by the drive control circuit unit 505. Projection light modulated by the liquid crystal light valve 507 is focused by means of a projection lens 508 on a screen to form an image thereon.

One example of such a liquid crystal projector is disclosed for instance in JP-A-63-133872.

In the above-described prior art liquid crystal projector focalization of the lens is performed by a manual operation. Considering a normal mode of use of the liquid crystal projector, there exists a big distance in position between the liquid crystal projector body, the screen and the user (viewer). This in turn presents a problem of causing inconvenience incidental to the operation.

It is an object of the present invention to remedy the problems described above and to provide an auto-focusing method in a microprocessor controlled liquid crystal projector constructed to improve the operability.

This object is achieved with auto-focusing method as claimed. A preferred embodiment of the invention is subject-matter of the dependent claim.

With the liquid crystal projector to which the present invention is applied, the inputs from the input unit, the non-lighting detector and the temperature detector serve to control the main power supply control unit, the light source power supply control unit, the input changeover unit, the D/A converter, the lens control unit, the alarm unit, the fan motor control unit and the display unit by use of the input means, the command discriminating means, the power supply control means, the input changeover means, the picture processing means, the voice processing means, the lens control means, the timer means, the alarm issuing means, the fan motor control means, the non-lighting detection means, the temperature detection means and the display control means. Those operations are stored in the storage unit and indicated on the display unit and the alarm unit. The aforementioned individual units and detectors are unitarily controlled by the above-described means.

The storage unit stores the previous operating status even when the liquid crystal projector is switched off. Thus, there is no necessity for resetting the operating status when the liquid crystal projector is switched on again.

One embodiment of the present invention will be described hereinafter with reference to the accompanying drawings, in which:
- Fig. 1: is a functional block diagram illustrating a fundamental construction of a liquid crystal projector embodying the present invention,
- Figs. 2(a) to 2(f): are block diagrams showing one embodiment in which the liquid crystal projector is constructed by use of a microcomputer,
- Figs. 3(a) to 3(e-2) and 3(1) to 3(o): are flowcharts of the controlling operations, and
- Fig. 4: is a block diagram depicting a construction of a prior art liquid crystal projector.

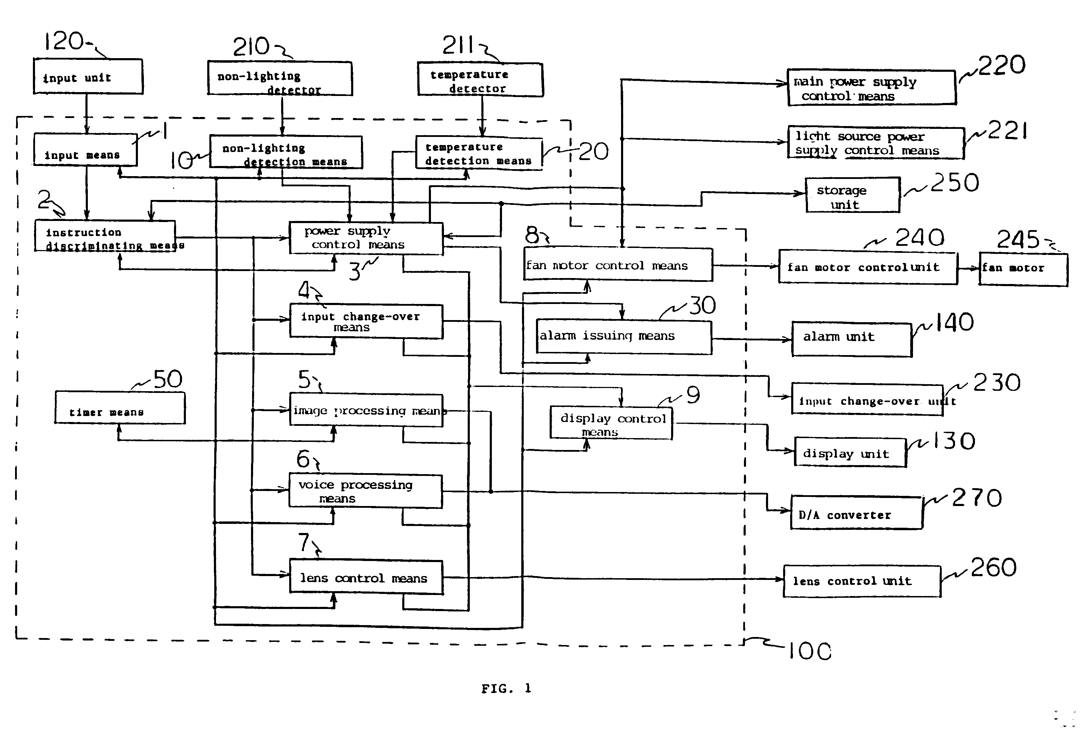

Fig. 1 is a functional block diagram illustrating a fundamental construction of the liquid crystal projector embodying according to this invention.

Referring to Fig. 1, there is depicted an input unit 120 for inputting an operating status of the liquid crystal projector (hereinafter abbreviated to LVP) to an input means 1. Connected to the input means 1 is an instruction discriminating means 2 for judging the operating status of the LVP on the basis of the output from the input means 1. Based on the judged instruction or command, a power supply control means 3, an input changeover means 4, a picture processing means 5, a voice processing means 6 and a lens control means 7 are activated. 210 is a non-lighting detector for detecting non-lighting of the projection light source. A non-lighting detection means 10 outputs information on the lighting or non-lighting of the projection light source to the power supply control means 3 when the non-lighting detector 210 keeps indicating non-lighting of the projection light source for a preset time. In the case of detecting non-lighting of the projection light source by the non-lighting detection means 10, when the power supply is turned on, a power supply remaking operation is effected a preset limited number of times at a preset time interval. If non-lighting of the projection light source is detected by the non-lighting detection means even during the power supply remaking operation, information indicating a fault of the projection light source is stored in a storage unit 250 and then displayed on a display unit 130 via a display control means 9. 211 is a temperature detector for detecting a temperature within the LVP. The temperature detector 211 transmits a temperature signal and the information created by the temperature detection means 20 based on the temperature signal is periodically outputted from the temperature detection means 20 to the power supply control means 3 at a preset time interval. A control signal is outputted from a fan motor control means 8 to a fan motor control unit 240 in accordance with the temperature information given from the temperature detection means 20. 4 is an input changeover means for changing over an input source connected to an input changeover unit 230. The picture processing means 5 controls picture qualities by e.g., adjusting the hue and increasing or decreasing the color density, contrast, sharpness and brightness. The information on the picture qualities is outputted to a D/A converter 270. The picture quality information controlled by the picture processing means 5 is stored in the storage unit 250. The information is then reproduced when the power supply is turned on. 6 is a voice processing means for controlling an increment and decrement of a sound volume on the basis of an output from the instruction discriminating means 2 and for outputting voice information to the D/A converter 270. The voice information controlled by the voice processing means 6 is stored in the storage unit 250 so that it can be reproduced when the power supply is turned on after it had been turned off. 7 is a lens control means for outputting signals for lens control such as auto-focusing, power focusing, power zooming and power angular adjustment (between the focal plane and the optical axis of the lens, hereinafter referred to as swing) to the lens control unit 260 on the basis of outputs from the instruction discriminating means 2. The display control means 9 controls the display of the operating statuses of the respective means on the basis of outputs from the power supply control means 3, the input changeover means 4, the picture processing means 5, the voice processing means 6 and the lens control means 7. In response to output signals transmitted from the display control means 9 the display unit 130 performs the display operation.

If an abnormal operation is detected by the power supply control means 3, an alarm unit 140 is driven by an alarm issuing means 30 to give alarm.

A timer means 50 controls the time in the respective means.

The numeral 221 denotes a light source power supply control unit and 220 a main power supply control unit, both being controlled by an output from the power supply control means 3.

A computer-based control module 100 comprises the input means 1, the instruction discriminating means 2, the power supply control means 3, the input changeover means 4, the picture processing means 5, the voice processing means 6, the lens control means 7, the non-lighting detection means 10, the temperature detection means 20, the fan motor control means 8, the display control means 9 and the alarm issuing means 30.

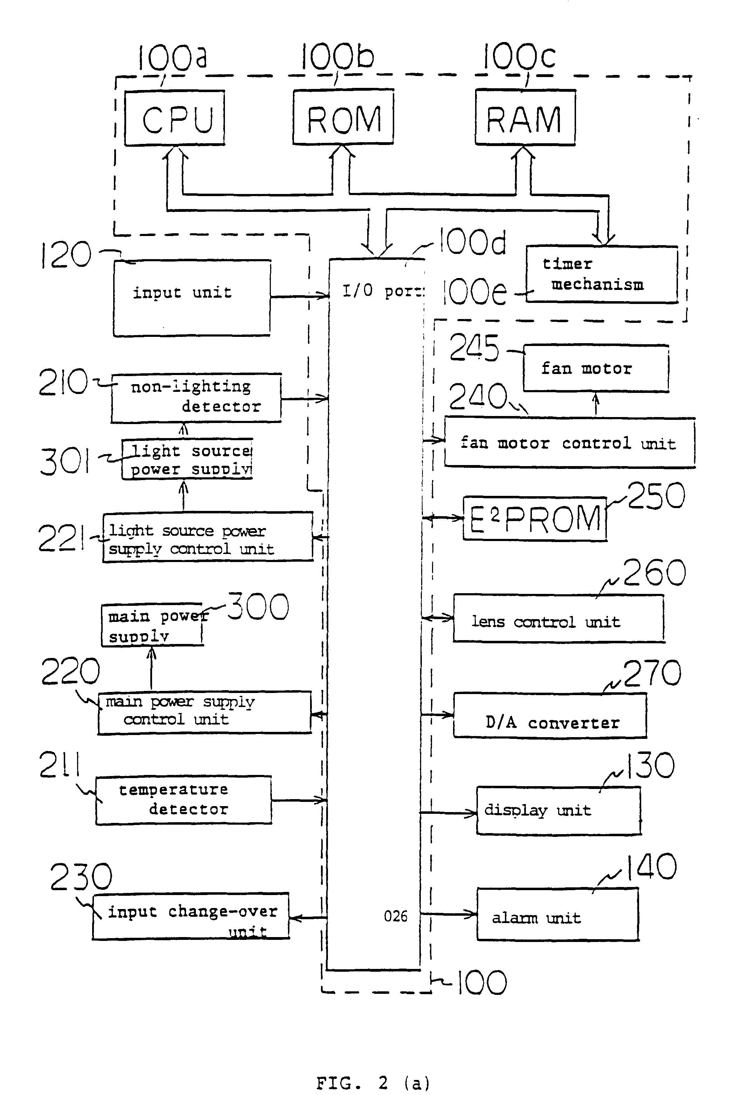

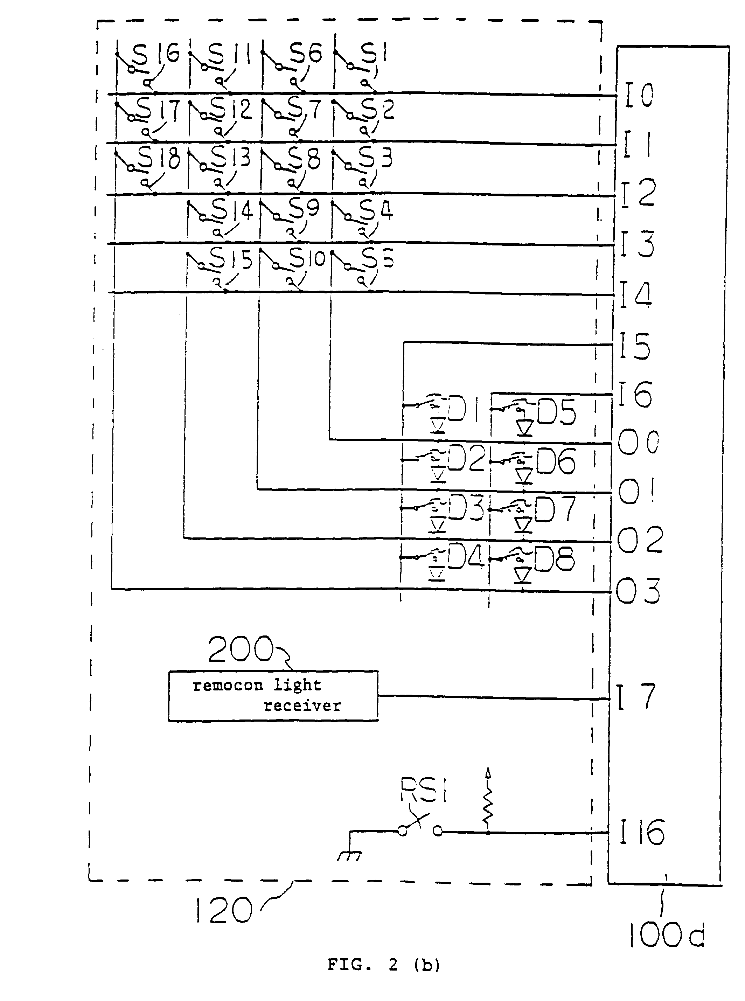

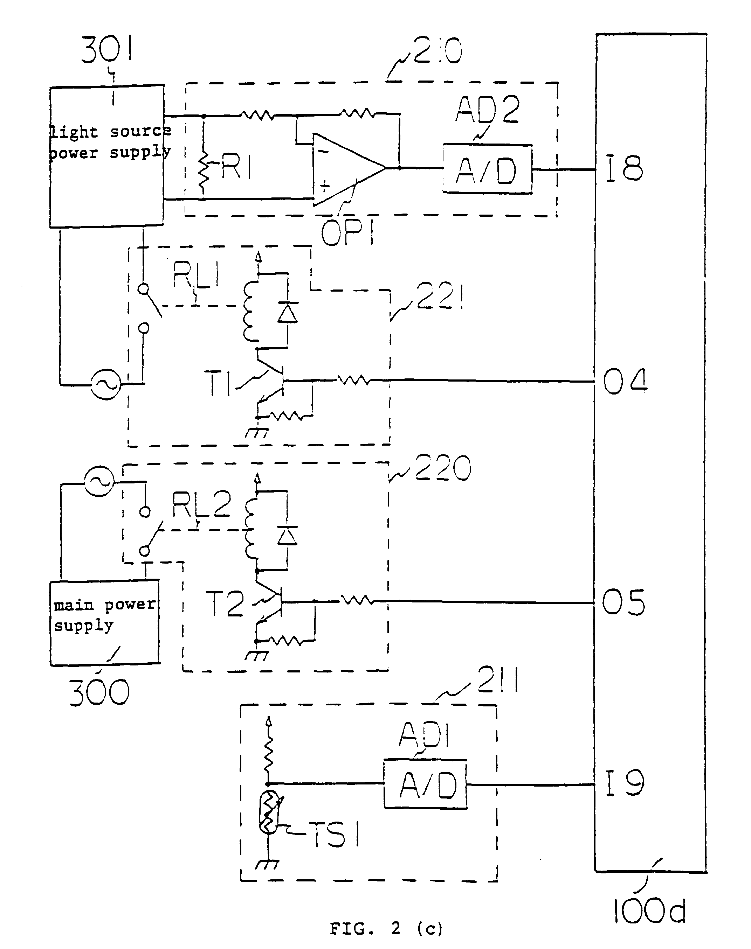

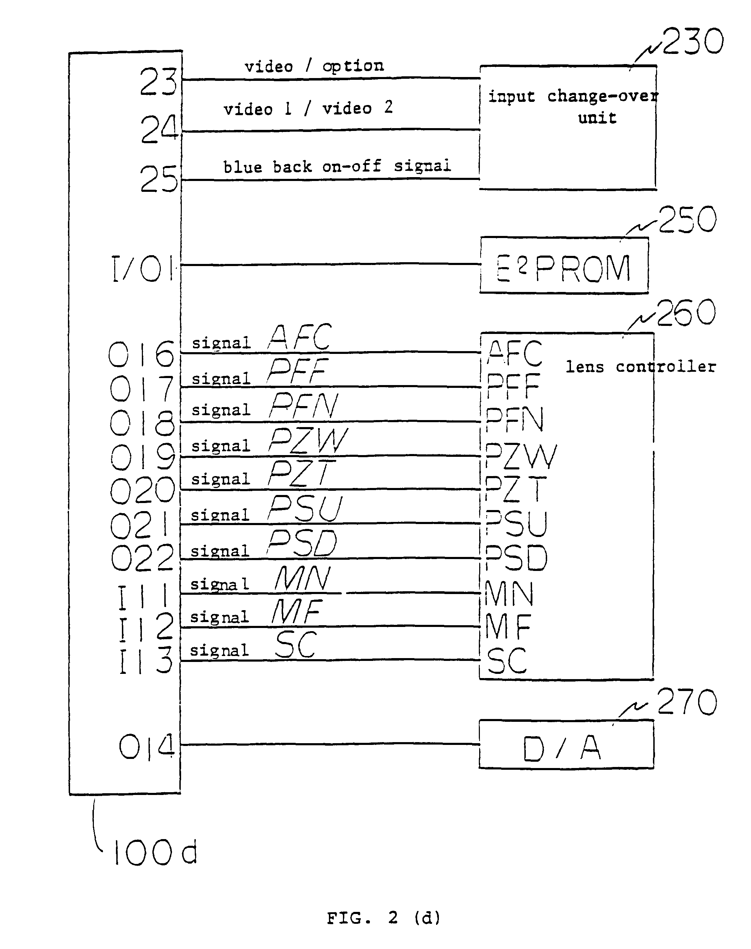

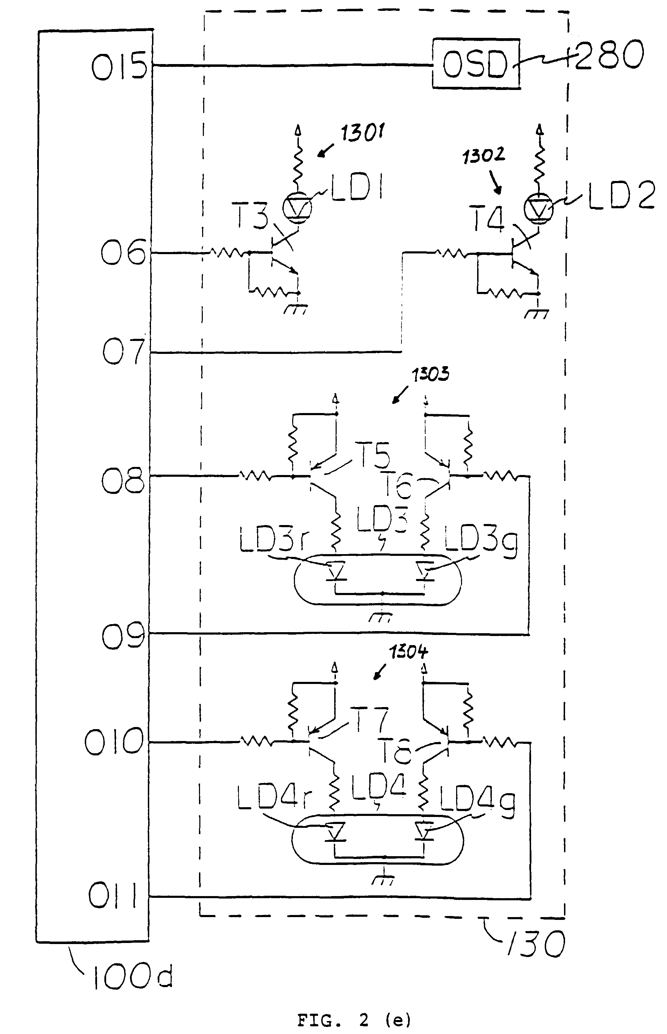

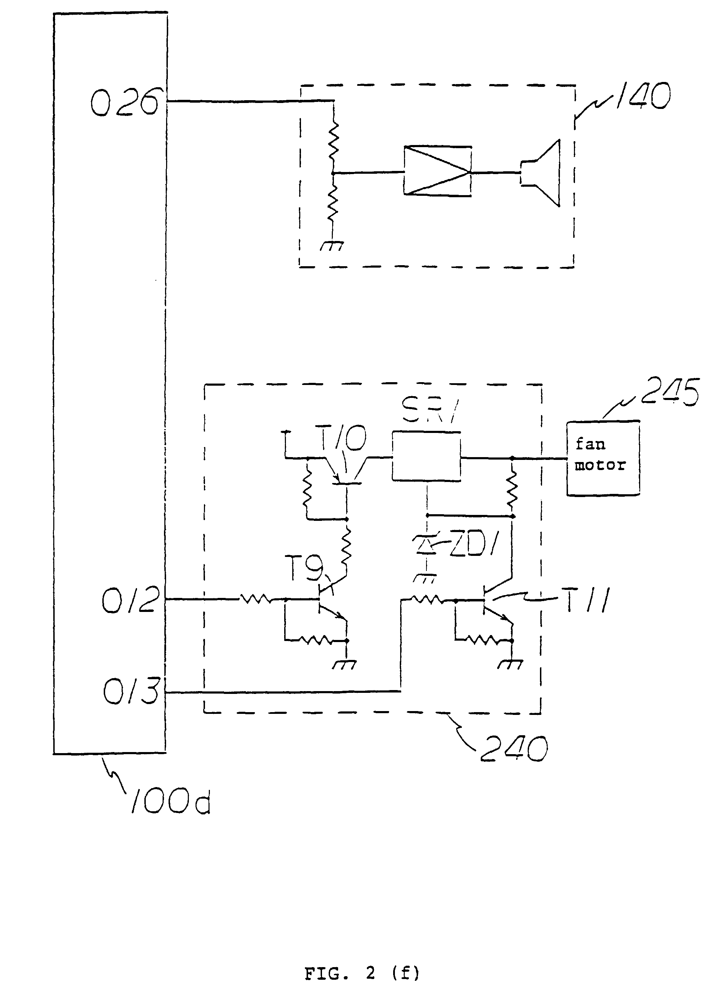

Figs. 2(a) to 2(f) are block diagrams showing one embodiment wherein the liquid crystal projector is constructed by use of a microcomputer.

A microcomputer system constituting the control module 100 is composed of a CPU 100a, a ROM 100b, a RAM 100c, an I/O port 100d and a timer mechanism 100e, as is shown in Fig 2(a).

Referring to Fig. 2(b), command switches S1-S18 and D1-D8 are connected to ports 10-16 and O0-O3 of the I/O port 100d. The switches include a power switch S1, a muting switch S2, a mode switch S3, a sound volume decreasing switch S4, a sound volume increasing switch S5, a pattern switch S6, a power focusing far switch S7, a power focusing near switch S8, a minus switch S9, a plus switch S10, a standard switch S11, a picture switch S12, a power zoom wide switch S13, a power zoom tele switch 14, an auto-focus switch S15, a power swing-up switch S16, a power swing-down switch S17, an auto-swing switch S18, an on-screen switch D1, a focus super switch D2, a focusing priority switch D3, a focus AF switch D4, an option A switch D7 and an option B switch D8. Depression of any of the switches can be confirmed by taking in a signal outputted from anyone of the output ports O0 through O3 by L-level scanning. Note that the take-process is an interrupt process. Connected to the input port 17 is an infrared-ray remote control light receiver (hereinafter referred to as a remocon light receiver) 200 to which a command signal is inputted from a remote controller. The command switches S1-S18 and D1-D8 and the remocon light receiver 200 are combined to constitute the input unit 120.

Referring now to Fig. 2(c), the light source power supply control unit 221 is shown to include a transistor T1 and a relay RL1 as the main components. When the signal level of the output port O4 is H, the transistor T1 is switched on to energize the relay RL1 which then connects a light source power supply 301 to an electric power source.

The main power supply control unit 220 has the same construction as the light source power supply control unit 221, including a transistor T2 and a relay RL2. When the signal level of the output port O5 is H the transistor T2 is switched on to energize the relay RL2 which then connects a main power supply 300 to an electric power source.

The temperature detector 211 is connected to the input port 19 and comprises a voltage divider including a temperature sensor TS1 and an A/D converter AD1. The A/D converter AD1 converts the temperature dependent analog signal from the voltage divider into a digital value which is then applied to the input port 19.

The non-lighting detector 210 for detecting non-lighting of the projection light source is connected to the input port 18. The current of the projection light source is made to flow through a detection resistor R1 so that the voltage drop at the resistor R1 is a measure of the projection light source current. A voltage amplifier OP1 amplifies the voltage drop between the two ends of the resistor R1. An A/D converter A/D 2 converts the amplified signal into a digital value which is than inputted to the input port I8.

Fig. 2(e) shows the display unit 130 to include lamp circuits 1301, 1302, 1303 and 1304 and an on-screen display unit (OSD) 280.

Lamp circuit 1301 includes a temperature alarm lamp LD1 connected via a transistor T3 to the output port O6. When the signal level of the output port O6 is H the transistor T3 is turned on to light up the temperature alarm lamp LD1. The lamp circuit 1302 includes a light source lifespan lamp LD2 connected via a transistor T4 to the output port O7. When the signal level of output port O7 is H, the transistor T4 is switched on to thereby light up the light source life-span lamp LD2. The lamp circuit 1303 includes a light source operation lamp LD3r which is connected via a transistor T5 to the output port O8, and a light source operation lamp LD3g which is connected via a transistor T6 to the output port O9. The light source lamps LD3r and LD3g emit red and green light respectively and both are united into one body to from a lamp LD3. When the signal level of the output port O8 is L the transistor T5 is turned on to thereby light up the light source operation lamp LD3r. When the signal level of the output port O9 is L the transistor T6 is turned on to light up the light source operation lamp LD3g. When L-level signals are simultaneously output from the output ports O8 and O9, the light source operation lamps LD3r and LD3g will simultaneously lit up and orange light will be emitted.

The lamp circuit 1304 has the same construction as the lamp circuit 1303 and includes power supply display lamps LD4r and LD4g driven by transistors T7 and T8 which are connected to the output ports O10 and O11, respectively. The power supply display lamps LD4r and LD4g are united into one body to form a lamp LD4. The operation of the lamp circuit 1304 is the same as has been explained with respect to the lamp circuit 1303.

As shown in Fig. 2(f), connected to the output ports O12 and O13 is the fan motor control unit 240 including transistors T9 through T11, a Zener diode ZD1 and a three-terminal regulator SR1. A signal for controlling rotation or non-rotation of a fan motor 245 is outputted from the output port O12. When the signal level of the output port O12 is H, the transistors T9 and T10 are switched on to supply electric power to the fan motor 245 via the regulator SR1. Outputted from the output port O13 is a signal for controlling the rotational speed of the fan motor 245. When the signal level of the output port O13 is L the transistor T11 is turned off. The output voltage of the three-terminal regulator SR1 is then higher by the Zener voltage of the Zener diode ZD1 than it is in the conductive state of the transistor T11. Therefore, in this state the fan motor 245 rotates at a relatively high speed resulting in an increase of air quantity moved by the fan, and correspondingly resulting in an increase of the cooling effect of the fan. When the signal level of the output port O13 is H, the transistor T11 is switched on whereby the cathode of the Zener diode ZD1 is connected to ground potential. Thereby the output voltage of the regulator SR1 is decreased. As a result the fan motor rotates at a relatively low speed to cause a smaller air throughput by the fan and a reduction of the noises produced by the fan.

As shown in Fig. 2(d), connected to the I/O port I/O1 is the storage unit 250 which is an electrically erasable programmable ROM, commonly referred to as E²PROM. This storage unit keeps the information even when the power supply is turned off.

The D/A converter 270 is connected to the output port O14. Connected to the output port O15 (Fig. 2(e)) is the on-screen display unit 280 (hereinafter abbreviated to OSD). Pieces of information of the control module 100 are projected on a screen by means of the OSD.

Referring to Fig. 2(d) again, control signals for the lens control unit 260 are outputted from the output ports O16 through O22. Sensor signals of the lens control unit 260 are inputted to the input ports I11 through I14. An auto-focus-on AFC signal is outputted from the output port O16. A power focus-far-side driving signal PFF is outputted from the output port O17. A power focus-near-side driving signal PFN is outputted from the output port O18. A power zoom-wide-side driving signal PZW is outputted from the output port O19. A power zoom-tele-side driving signal PZT is outputted from the output port O20. Outputted from the output ports O21 and O22 are a power swing-up signal PSU and a power swing-down signal PSD. When the signal outputted from the output port O21 assumes an H level, the screen ascends. When the signal outputted from the output port O22 assumes an H level the screen descends. Inputted from the lens control unit 260 to the input port I11 is a focus-near-side driving signal MN. A focus-far-side driving signal MF is inputted from the lens control unit 260 to the input port 112. A lens central position signal SC of the lens control unit 260 is inputted to the input port 113.

Outputted from the output port O23 to the input changeover unit 230 is a signal for changing over the input source from an external input terminal to an internal option input terminal. Outputted from the output port O24 to the input changeover unit 230 is a signal for changing over between a video 1 input and a video 2 input to select the input source. A blue back on-off signal is outputted from the output port O25 to the input changeover unit 230.

Inputted to the input port 116 in Fig. 2(b) is a signal for resetting a light source cut-off flag stored in the storage unit 250 when the light source has been replaced.

Referring to Fig. 2(a) an alarm signal is outputted from the output port O26 to the alarm unit 140.

A control program and data used by the program are stored in the ROM 100b.

The RAM 100c is used as a work memory during execution of the control program and further provides a variety of flag memory areas to hold the data of the storage unit 250. The storage unit stores an operating status of the liquid crystal projector such as a set value of the D/A converter 270 (Fig. 2(d)) and the light source cut-off flag.

The timer mechanism 100e functions as a timer during the execution of the control program.

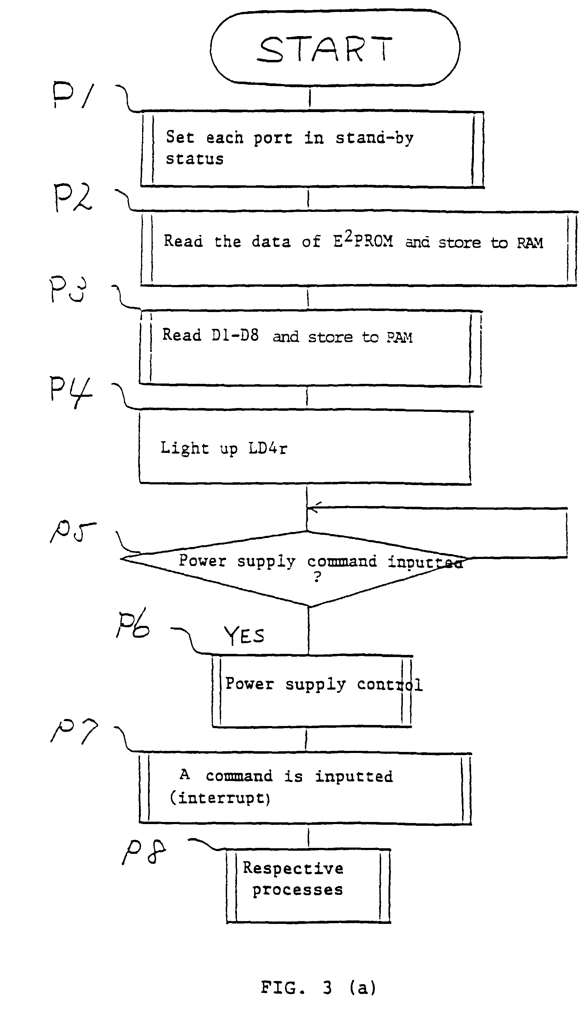

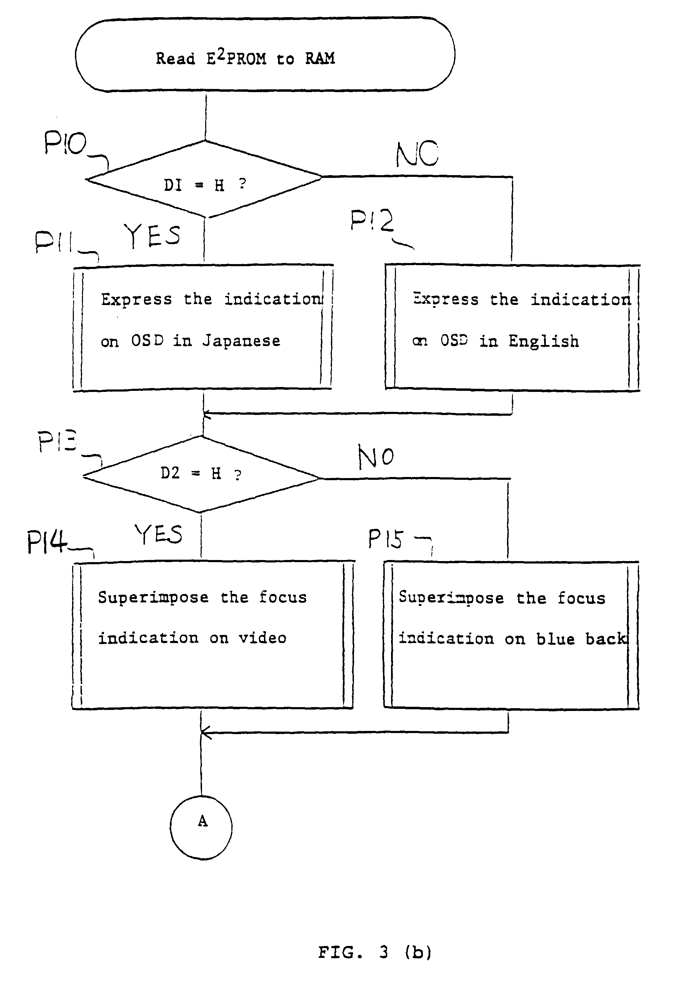

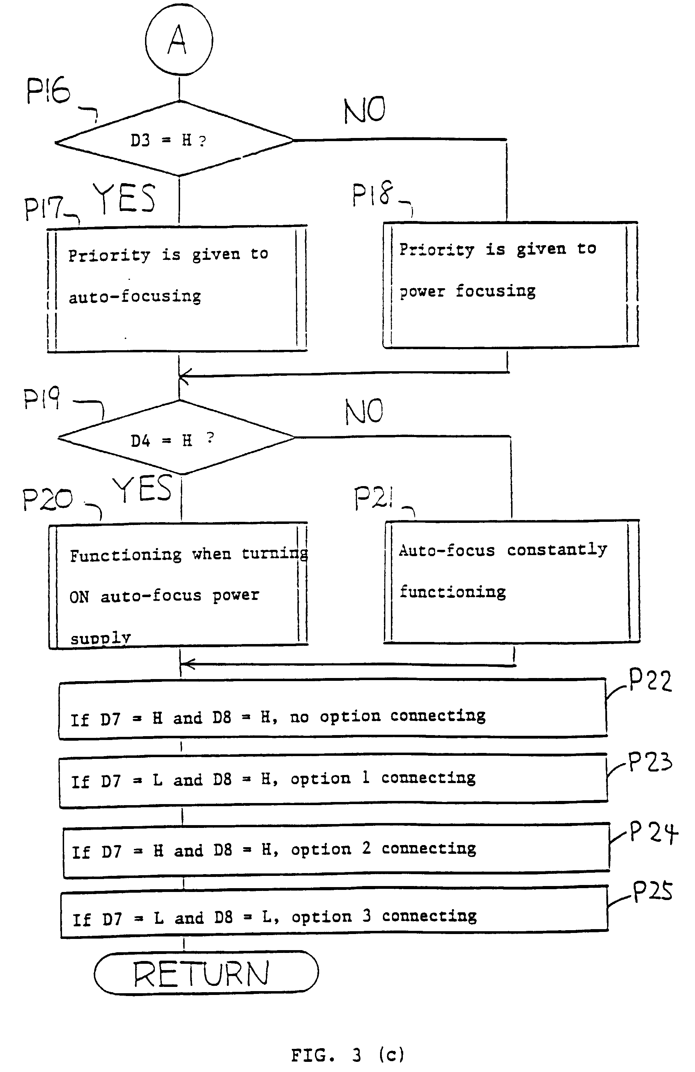

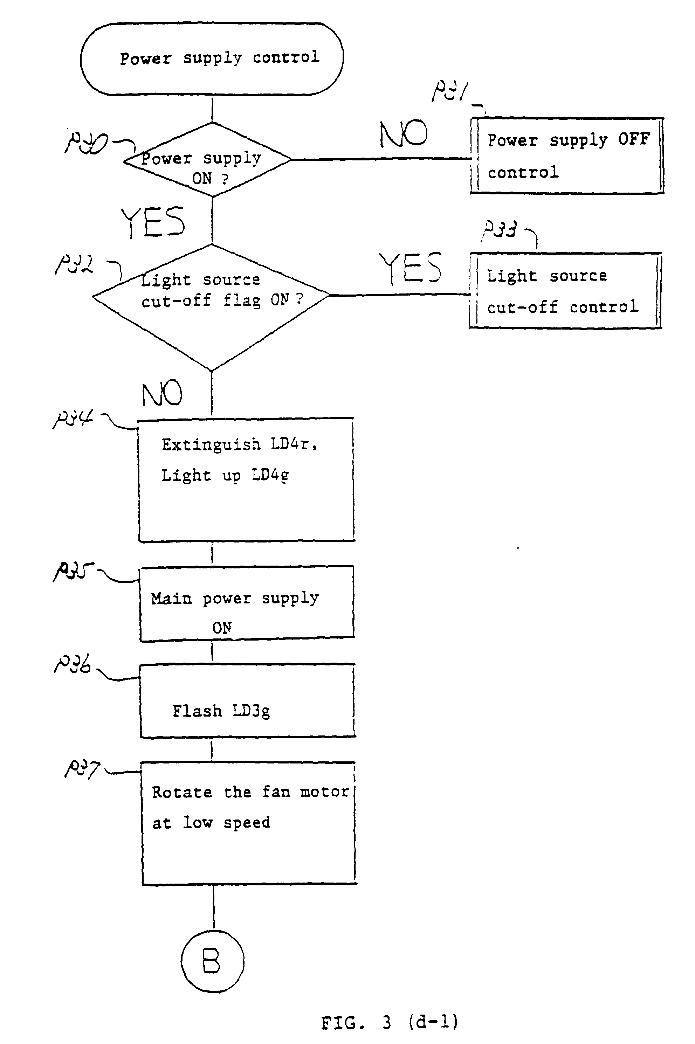

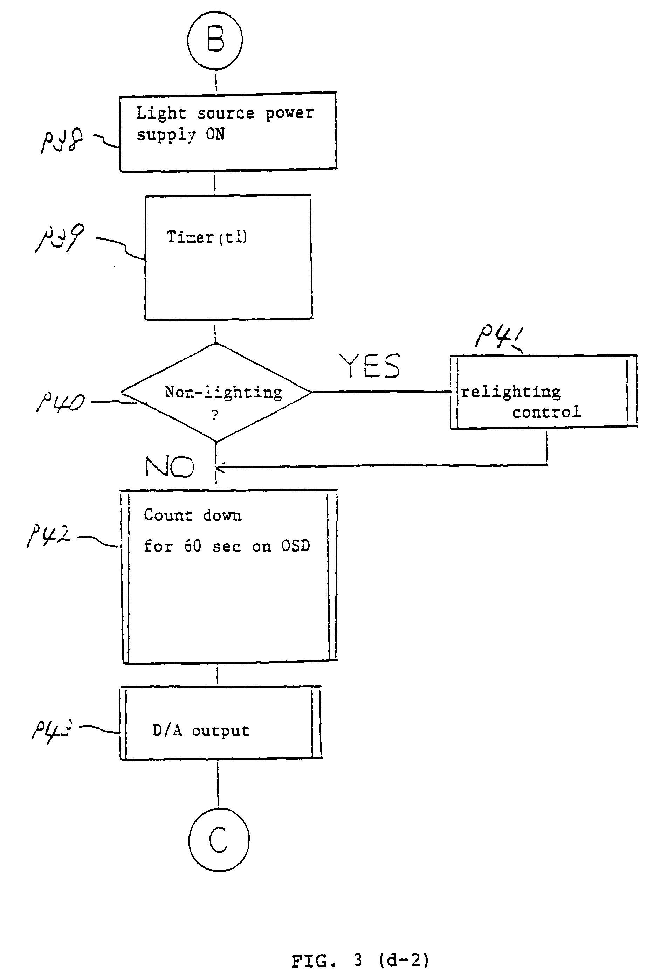

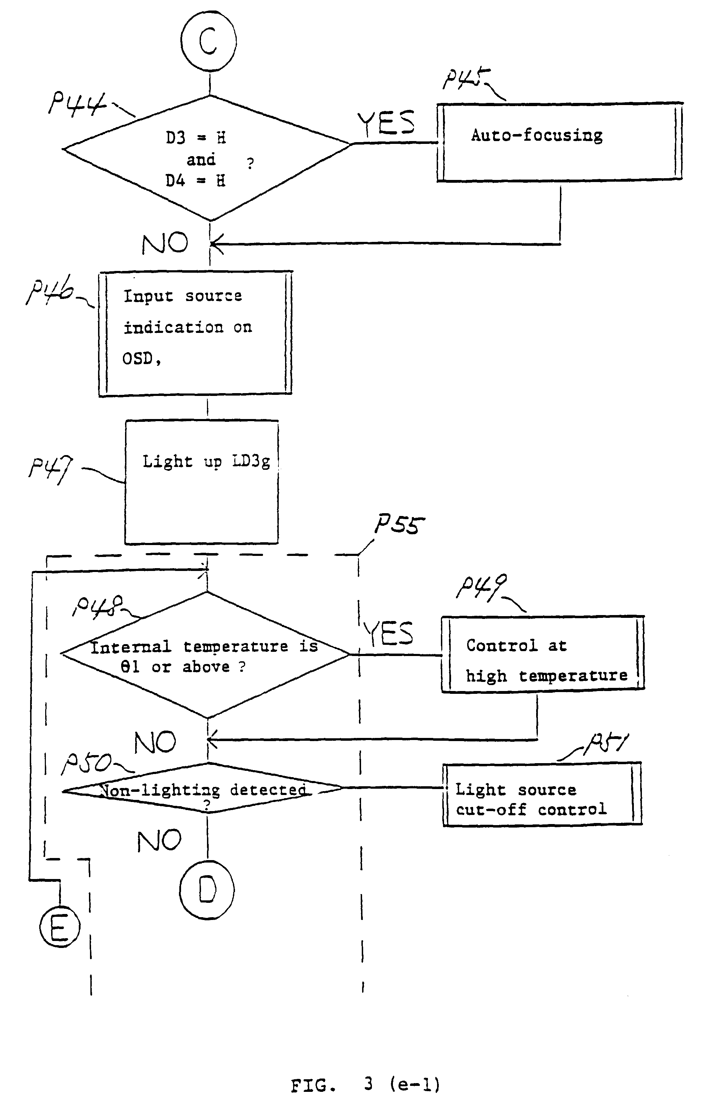

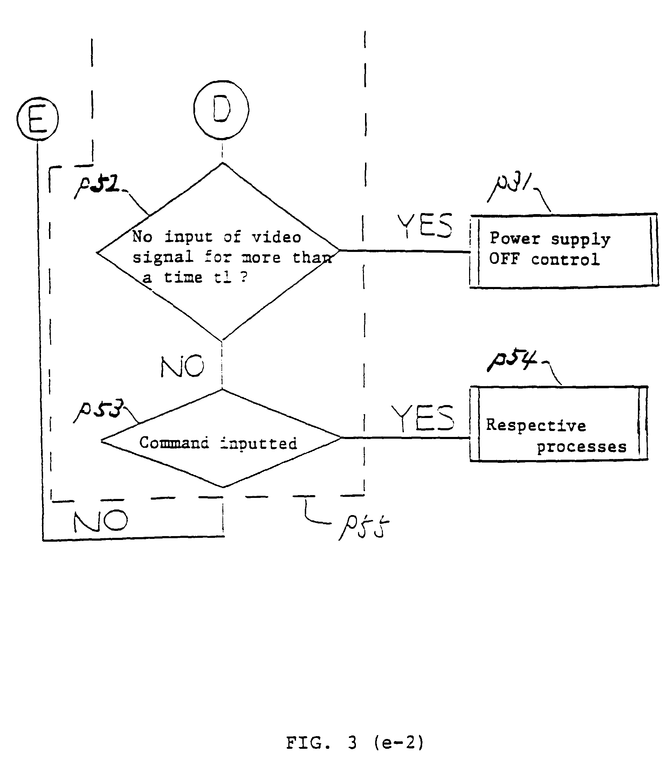

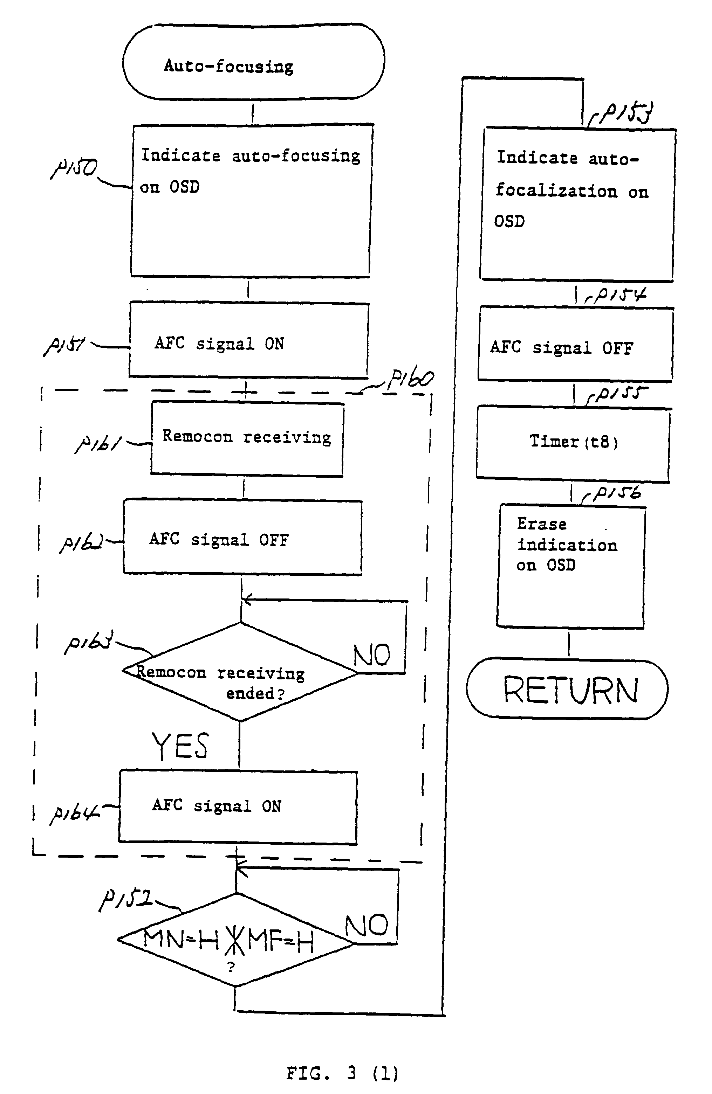

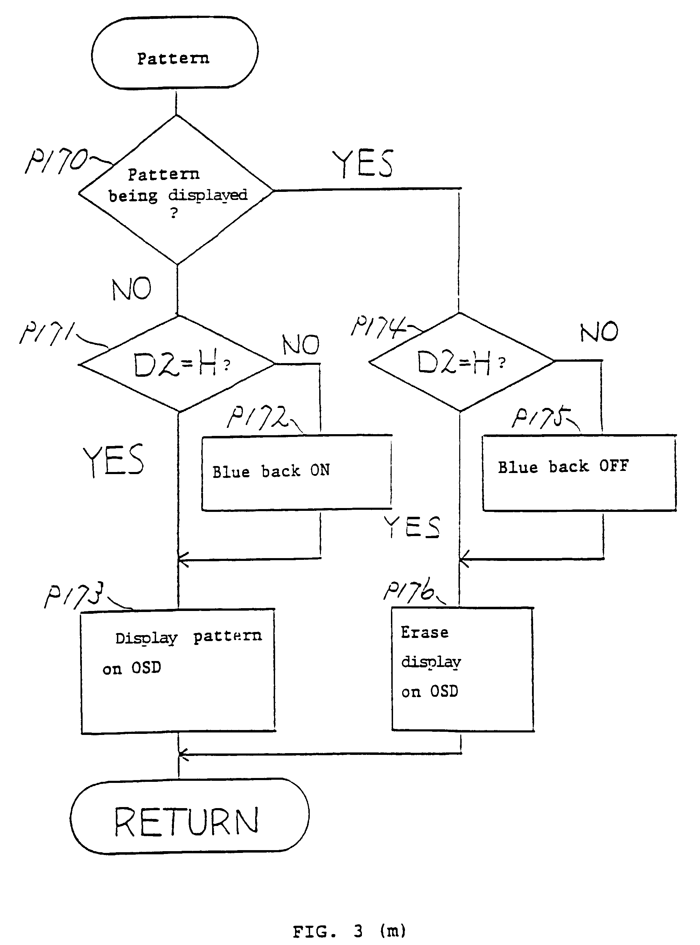

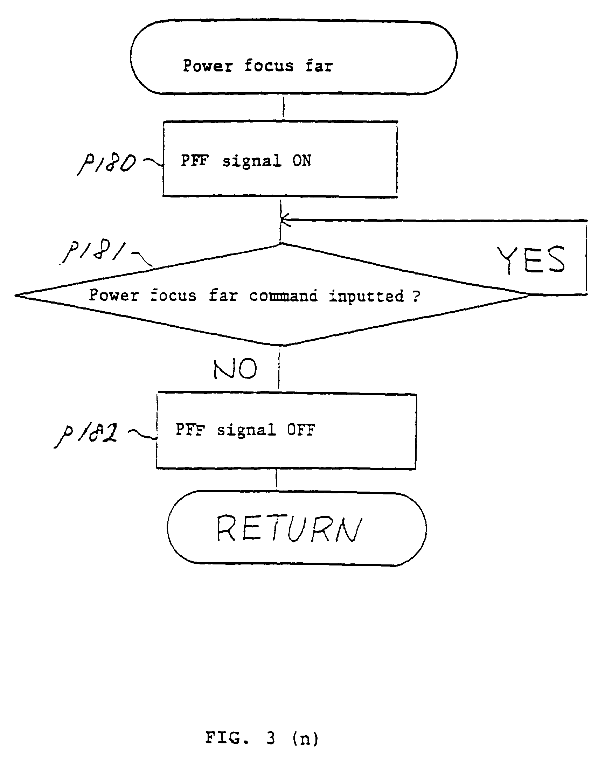

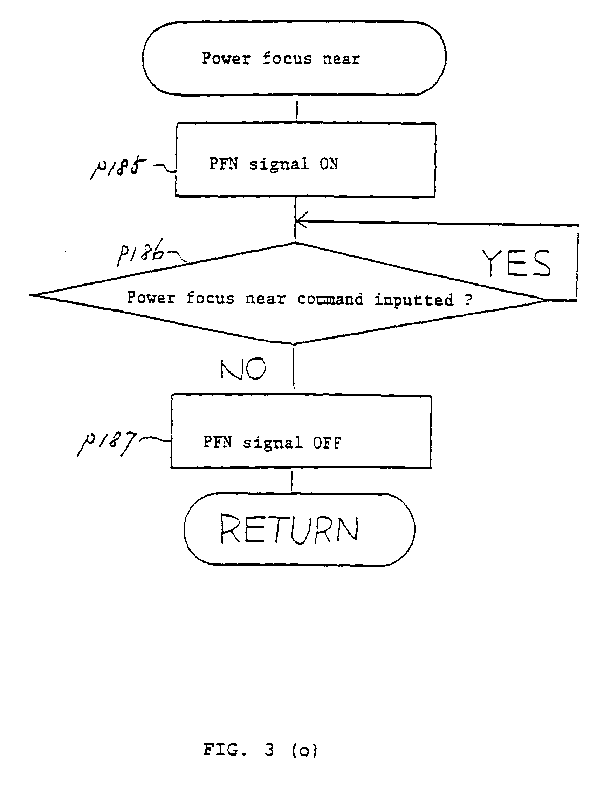

A control program for the above embodiment will be explained hereinafter with reference to Figs. 2(a) to 2(f) and the flowcharts of Figs 3(a) to 3(z). Note that in the description of the flowcharts the symbols P1, P2,... represent the numbers of processing procedures (steps).

Fig. 3(a) is a flowchart schematically showing main processes of the program.

Immediately after the start the individual ports of the I/O port 100d are set in a stand-by status at a step P1. Subsequent to this step, the data of the E²PROM 250 are read and stored in a constant area of the RAM 100C at P2. The data containing set values for the D/A converter 270 and light source cut-off information are employed in the subsequent processing procedures. Then, statuses of the command switches D1 through D8 are read (P10-P25, Fig. 3(b) and 3(c)) and stored in the constant area of the RAM 100c at P3. The subsequent operations are determined depending on the statuses of the command switches D1-D8. For instance, if the command switch D1 is off indications given by means of the OSD 280 are in Japanese, whereas they are in English if the command switch D1 is on. It follows that the fundamental operating statuses of the control module 100 are developed in the RAM 100C as flags by the above described processing procedures. Next, the power supply lamp LD4r is lit up at P4 indicating that the control module is in the stand-by status. The control module 100 remains in the stand-by status until a power supply command is inputted from a command switch or the remocon light receiver 200 at P5. When the power supply command is detected at P5, the operation enters into a power supply control process at P6. When the power supply has been normally turned on, a command inputted at P7 will be judged by the respective processes at P8 and the operation than moves to the individual processing procedures.

The control over the power supply will next be described. Referring to Figs 3(d) and 3(e), the judgment as to whether a power supply command represents an on or off state of the power supply is made at P30. When the power supply command instructs off state of the power supply, the process moves to a power off control. When the power supply command instructs power on, the light source cut-off flag in the RAM 100c is checked at P32. If the flag is on the process shifts to a light source cut-off control at P33. However, if the flag is off the power supply display lamp LD4g is lit up at P34, and the colour of the power supply display lamp LD4 is green indicating the operating status. The main power supply 300 is turned on at P35 and the components other then the light source start functioning. The light source operation lamp LD3g starts flashing in green indicating that the light source is warming up (P36). The fan motor 245 starts rotating at said lower speed (P37) and the light source power supply control unit 221 is switched on at P38 to thereby initiate the lighting operation of the projection light source. Subsequently, after a time t1 determined by a timer has passed (P39) the output of the non-lighting detector 210 is examined at P40. If non-lighting of the protection light source is detected, the process moves to relighting control (P41). When the projection light source is lit up, a count-down indication by means of the OSD 280 continues to be effected for 60 seconds (P42). This is a wait period until the light quantity emitted by the projection light source has assumed a prescribed value. In the meantime contents of the RAM 100c which include picture information, i.e., on hue and color density, and voice information, viz. on sound volume, are outputted to the D/A converter 270 at P43. After the process P43 has been completed, the status of the command switches D3 and D4 is checked at P44. If both command switches are off, this means a mode (P20) to perform auto-focusing when the power supply is turned on as shown in Fig. 3(c). Hence, the auto-focusing process is effected at P45. Next, an indication of the present input source is carried out at P46 and the light source operation lamp LD3g is lit up in green at P47 indicating normal lighting of the projection light source. From this step onward the fact that an internal temperature of the LVP exceeds Θ1 is detected from the output of the temperature detector 211 at P48 by the interrupt process P55. If the internal temperature exceeds Θ1 the operation moves to a high temperature control P49. When a drop-out of the projection light source is detected at P50 from the output of the non-lighting detector 210 the operation shifts to a light source cut-off control P51. If there is no video signal input for a given time t1 during the operation of the LVP, the control moves to a power supply off process P31. A command judgment is made at P54 after a command has been input at P53, and the control moves to the respective process.

Fig. 3(1) is a flowchart showing the auto-focus process according to the present invention. When inputting an auto-focus command from an auto-focus switch S15 or the remocon light receiver 200, the fact that auto-focusing is being executed is displayed by means of the OSD (P150). Next, an AFC signal is turned on at P151. If both an MN signal and an MF signal assume the H level at P152, this implies that the focalization is attained (P152). Hence, the indication by means of the OSD is changed into a representation of auto-focalization. Then, the AFC signal is turned off (P154). After a wait time t8 (P155), the representation by means of the OSD is erased (P156). After the AFC signal was turned on at P151, when an input from the remocon light receiver 200 is given during auto-focusing (P161), the AFC signal is turned off (P162), and there is a wait till an input of a remocon signal disappears (P163). The AFC signal is turned on once again (P164), and auto-focusing continues. Note that the steps from P161 to P164 are executed as an interrupt process (P160). If the command switches D3 and D4 are off and on, respectively, (P18, P21 in Fig. 3(c)), the interrupt process of P160 is executed during an auto-focus constant operation, if a receiver for instance an infrared receiver used for focusing receives a remocon signal beam. Influences on auto-focusing by remocon signal beams are thereby reduced.

Referring to Fig. 3(m), when inputting a pattern command from a pattern switch S6 or the remocon light receiver 200, a pattern serving as a criterion for focalization is displayed on the screen of the OSD or erased therefrom. Where no pattern is presently displayed at P170, the blue back signal transmitted from the output port O25 is turned on (P172) if the command switch D2 (*assumes the L level) is off (P15) at P171. Then, the pattern is displayed by means of the OSD at P173. If the pattern is presently displayed at P170, the blue-back-off is effected at P174 and P175 and the pattern on the screen is erased at P176.

Fig. 3 (n) is a flowchart illustrating the power focus-far-side process. When inputting a power focus-far-command from the command switch S7 or the remocon light receiver 200, a PFF signal (output port O17) is turned on while the command is being inputted (P180-P182). Consequently, a far-point focalization by the lens is attained.

Fig. 3(o) is a flow chart showing a power focus-near-side process. During inputting of a power focus-near-command from the command switch S8 or the remocon light receiver 200, a PFN signal (output port O18) is turned on (P185-P187), with the result that a near-point focalization by the lens is fulfilled.

## Claims

1. An auto-focusing method in a microprocessor controlled liquid crystal projector comprising the steps of
(a) detecting an auto-focus command,
(b) effecting, in response to said detecting in step (a), display of a first indication on a screen indicating that auto-focusing is being executed, and applying an auto-focus signal (AFC) to a lens controller (260) to perform auto-focusing,
(c) detecting that a focused state has been reached, and
(d) effecting display of a second indication on the screen indicating that the focused state has been reached in response to said detecting in step (c).

2. The method of claim 1 in a liquid crystal projector equipped with infrared remote control means further comprising the step of suspending said auto-focusing while an infrared light beam from said remote control means is being received.

## Patentansprüche

1. Autofokussierungsverfahren in einem microprozessorgesteuerten Flüssigkristallprojektor, umfassend die Schritte:
(a) Erfassen eines Autofokusbefehls,
(b) Anzeigen, als Antwort auf die Erfassung im Schritt (a), einer ersten Anzeige auf einem Schirm, die angibt, daß die Autofokussierung durchgeführt wird, und Anlegen eines Autofokussignals (AFC) an einen Linsencontroller (260) zur Durchführung der Autofokussierung,
(c) Erfassen, daß der Fokuszustand erreicht wurde, und
(d) Anzeigen, als Antwort auf die Erfassung im Schritt (c), einer zweiten Anzeige auf dem Schirm, die angibt, daß der Fokuszustand erreicht wurde.

2. Verfahren nach Anspruch 1 in einem Flüssigkristallprojektor, der mit einer Infrarotfernsteuerung ausgestattet ist, ferner umfassend den Schritt des Aussetzens der Autofokussierung, während ein Infrarotlichstrahl von der Infrarotfernsteuerung empfangen wird.

## Revendications

1. Procédé de focalisation automatique dans un projecteur à cristal liquide commandé par microprocesseur comportant les étapes qui consistent à :
(a) détecter une commande de focalisation automatique,
(b) effectuer, en réponse à la détection à l'étape (a), l'affichage d'une première indication sur un écran indiquant que la focalisation automatique est en train d'être exécutée, et appliquer un signal (AFC) de focalisation automatique à un dispositif (260) de commande de lentille pour effectuer une focalisation automatique,
(c) détecter qu'un état focalisé a été atteint, et
(d) effectuer l'affichage d'une seconde indication sur l'écran indiquant que l'état focalisé a été atteint en réponse à la détection à l'étape (c).

2. Procédé suivant la revendication 1 dans un projecteur à cristal liquide muni de moyens de commande a distance infrarouges comportant en outre l'étape qui consiste à suspendre la focalisation automatique tandis qu'un faisceau de lumière infrarouge issu des moyens de commande à distance est en train d'être reçu.
